(19) Europäisches Patentamt
European Patent Office
Office européen des brevets

(11) EP 4 775 614 A1

(12) **EUROPEAN PATENT APPLICATION**
published in accordance with Art. 153(4) EPC

(43) Date of publication:
**15.07.2026 Bulletin 2026/29**

(21) Application number: **24863093.1**

(22) Date of filing: **26.08.2024**

(51) International Patent Classification (IPC):
***C08G 63/183*** *(2006.01)* ***C08G 63/78*** *(2006.01)*
***C08J 11/24*** *(2006.01)*

(52) Cooperative Patent Classification (CPC):
**C08G 63/183; C08G 63/78; C08J 11/24**

(86) International application number:
**PCT/KR2024/012668**

(87) International publication number:
**WO 2025/053512 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.09.2023 KR 20230116787**

(71) Applicant: **SK Chemicals Co., Ltd.**
**Seongnam-si, Gyeonggi-do 13494 (KR)**

(72) Inventors:
- **PARK, Jun-Yong**
  **Seongnam-si, Gyeonggi-do 13494 (KR)**
- **KIM, Jong-Gyu**
  **Seongnam-si, Gyeonggi-do 13494 (KR)**
- **KIM, Ji-Hun**
  **Seongnam-si, Gyeonggi-do 13494 (KR)**
- **PARK, Kwang-Woo**
  **Seongnam-si, Gyeonggi-do 13494 (KR)**
- **SHIN, Yong-Jun**
  **Seongnam-si, Gyeonggi-do 13494 (KR)**
- **LEE, Seong-Ki**
  **Seongnam-si, Gyeonggi-do 13494 (KR)**
- **LEE, Joong Ki**
  **Seongnam-si, Gyeonggi-do 13494 (KR)**
- **JANG, Taewon**
  **Seongnam-si, Gyeonggi-do 13494 (KR)**

(74) Representative: **Dehns**
**10 Old Bailey**
**London EC4M 7NG (GB)**

# (54) POLYESTER RESIN AND POLYESTER CONTAINER MANUFACTURED THEREFROM

(57) The present invention relates to a polyester resin comprising a repeating unit derived from a polymerization raw material including regenerated bis (2-hydroxyethyl) terephthalate, a polyester preform prepared therefrom, and a polyester container manufactured therefrom. The polyester resin has a controlled content of acetaldehyde (AA), thereby preventing the leaching of acetaldehyde (AA) and providing a polyester container with excellent heat resistance, weather resistance, and color properties.



Processed by Luminess, 75001 PARIS (FR)

## Description

## Technical Field

The present invention relates to a polyester resin having excellent thermal resistance and a controlled content of acetaldehyde (AA) and to a polyester container prepared from the polyester resin and having excellent thermal resistance, weather resistance, color characteristics, and the like.

## Background Art

Polyester resins, among polymers, are widely used as materials for containers for beverages, various packaging films, various interior and exterior parts, and the like by virtue of their excellent thermal resistance, transparency, and gas barrier properties, along with high mechanical strength.

Various products manufactured using such a polyester resin as a raw material are discarded as waste after use, which causes serious environmental problems. Therefore, technologies for recycling polyester waste containing a polyester resin are attracting attention.

Meanwhile, a polyester resin is prepared by charging polymerization raw materials to a reactor and performing a polycondensation reaction, a solid-state polymerization reaction, and the like. In such an event, acetaldehyde (AA) is formed as a by-product during the reactions, which may remain in the polyester resin even after separation and purification procedures.

If a beverage container is manufactured using a polyester resin in which acetaldehyde (AA) remains, the flavor of the beverage contained in the beverage container may be altered, thereby deteriorating the potability of the beverage. In response, a technology has been proposed to suppress the formation of acetaldehyde (AA) by adding additives, such as an amine compound, to the polymerization reaction procedure of polyester resins in order to minimize the residue of acetaldehyde (AA) in the polyester resins.

However, the use of such additives creates new, undesirable by-products, making it difficult to secure the properties of the polyester resin, and there are also limitations in controlling the residual content of acetaldehyde (AA) to the required level.

## Disclosure of Invention

## Technical Problem

In recent years, in order to improve environmental problems, which are emerging as the biggest problem, a technology has been proposed for recycling polyester waste by chemically depolymerizing polyester waste to obtain a recycled polymerization raw material and using it to prepare a polyester resin (regenerated polyester resin).

However, the present inventors have discovered that, in the recycled polymerization raw material obtained through the depolymerization procedure, impurities that cause the formation of acetaldehyde (AA) accumulate during the depolymerization procedure; thus, a polyester resin prepared using the same has a high content of acetaldehyde (AA), which has an adverse impact thereon.

To solve this problem, the present inventors have conducted various studies. As a result, it has been discovered that when the content of specific impurities (e.g., HA-ester, DEG-ester, BHET oligomer, and the like) contained in a recycled polymerization raw material is controlled, and when a polyester resin is prepared using the same, the content of acetaldehyde (AA) remaining in the polyester resin can be minimized.

Accordingly, an object of the present invention is to provide a polyester resin that can improve environmental problems and can have required physical properties while the content of residual acetaldehyde (AA) is minimized although additives are not separately used as in the prior art.

In addition, another object of the present invention is to provide a polyester preform prepared from the polyester resin.

In addition, another object of the present invention is to provide a polyester container prepared from the polyester resin and a process for preparing the same.

## Solution to Problem

In order to accomplish the above object, the present invention provides a polyester resin, which comprises a repeat unit derived from a polymerization raw material comprising recycled bis(2-hydroxyethyl) terephthalate, wherein when a preform obtained by molding the polyester resin at a temperature of 290°C is analyzed by gas chromatography (GC), the content of acetaldehyde (AA) is 25 ppm or less.

In addition, the present invention provides a polyester preform, which is prepared from the polyester resin.

In addition, the present invention provides a polyester container, which is prepared from the polyester resin.

In addition, the present invention provides a process for preparing a polyester container, which comprises first molding the polyester resin at a temperature of 250 to 300°C to produce a polyester preform; and second molding the polyester preform.

## Advantageous Effects of Invention

In the present invention, a polyester resin is prepared by using a recycled polymerization raw material capable of minimizing the formation of acetaldehyde (AA) during the polymerization reaction procedure of the polyester resin or a molding procedure of the polyester resin. Therefore, it is possible to provide a polyester resin that can improve environmental problems and can have excellent thermal resistance, thermal stability, color characteristics, and the like, while the content of acetaldehyde (AA) is very small.

In addition, in the present invention, a polyester container is prepared by using the polyester resin. Therefore, it is possible to provide a polyester container (e.g., a bottle for a cold beverage or a hot beverage) that has excellent thermal resistance, weather resistance, color characteristics, and the like, and does not cause problems due to acetaldehyde (AA).

## Best Mode for Carrying out the Invention

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element, and/or component, unless specifically stated to the contrary.

Throughout the present specification, the terms first, second, and the like are used to describe various components. But the components should not be limited by the terms. The terms are used for the purpose of distinguishing one element from another.

All numbers and expressions related to the quantities of components, reaction conditions, and the like used herein are to be understood as being modified by the term "about" unless otherwise indicated.

In the present specification, a singular expression is interpreted to cover a plural number as well unless otherwise specified in the context.

## Polyester resin

The polyester resin according to the present invention is a regenerated polyester resin prepared using a polymerization raw material comprising recycled bis(2-hydroxyethyl) terephthalate (r-BHET). It comprises a repeat unit derived from the polymerization raw material, and when a preform obtained by molding the polyester resin at a temperature of 290°C is analyzed by gas chromatography (GC), the content of acetaldehyde (AA) is 25 ppm or less.

Acetaldehyde (AA) is a substance that has an adverse impact and may be formed during the polymerization reaction procedure of a polyester resin or a molding procedure of a polyester resin. In the present invention, the content of acetaldehyde (AA) contained in a preform obtained through a molding procedure of a polyester resin is controlled to a specific range, i.e., 25 ppm or less, whereby the problems caused by acetaldehyde (AA) as described above can be solved.

For example, when a preform obtained by molding the polyester resin at a temperature of 290°C is analyzed by gas chromatography (GC), the content of acetaldehyde (AA) contained in the preform may be less than 25 ppm, 24 ppm or less, less than 24 ppm, 23 ppm or less, 22 ppm or less, 21 ppm or less, 20 ppm or less, 19 ppm or less, 18 ppm or less, 17 ppm or less, 16 ppm or less, or 15 ppm or less (specifically, 0 to 25 ppm, greater than 0 to less than 25 ppm, 0.01 to 24 ppm, 0.05 to 20 ppm, or 0.1 to 18 ppm).

Meanwhile, the polymerization raw material may be a recycled polymerization raw material obtained through the depolymerization of waste polyester. The depolymerization may be carried out by physical depolymerization or chemical depolymerization. Specifically, it may be carried out through a glycolysis reaction that cleaves the ester bonds of waste polyester by reacting the waste polyester with a glycol compound (e.g., ethylene glycol, diethylene glycol, or the like).

For example, the polymerization raw material may be obtained by first depolymerization of waste polyester with a glycol-based compound at 180 to 200°C (specifically, 180 to 195°C, 180 to 190°C, or 180 to 185°C) to obtain a reactant (first reactant), then second depolymerization of the reactant (first reactant) thus obtained with a glycol-based compound at 150 to 170°C (150 to 165°C, 150 to 160°C, or 150 to 155°C) to obtain a reactant (second reactant), and then separating and purifying the same.

The procedure of separating and purifying the reactant (second reactant) is not particularly limited, but it may comprise procedures such as cooling and solid-liquid separation, treatment with an ion-exchange resin, cooling crystallization, pressurized filtration, and distillation.

Specifically, in the cooling and solid-liquid separation, the reactant (second reactant) is cooled through a reduced pressure flash (at 100 to 135°C and 15 to 200 Torr) and then subjected to solid-liquid separation using a filter aid. As a result, the reactant (second reactant) can be converted to a liquid reactant. As the step of cooling and solid-liquid separation is carried out, solid foreign matters, such as particulates and insoluble organic substances, contained in the reactant (second reactant) are removed, thereby increasing the yield and purity of the polymerization raw material.

The treatment with an ion-exchange resin may be carried out by passing the liquid reactant through an ion-exchange resin or adding an ion-exchange resin to the liquid reactant. As the above procedure is carried out, ionic impurities contained in the liquid reactant may be removed to obtain a reactant (third reactant) with high purity. The ion-exchange resin used in the treatment with an ion-exchange resin may be a cation-exchange resin, an anion-exchange resin, an amphoteric ion-exchange resin, a chelate resin, or a combination thereof, commonly known.

The cooling crystallization may be carried out by cooling the reactant (third reactant) to form a crystallized product. The temperature for cooling the reactant (third reactant) is not particularly limited, but it may specifically be 70°C or lower, 60°C or lower, 50°C or lower, 40°C or lower, 30°C or lower, or 25°C or lower, and may be 0°C or higher, 5°C or higher, 10°C or higher, 15°C or higher, or 20°C or higher. As the cooling crystallization is carried out, a crystallized product from which impurities (e.g., acetate-based ester compounds, diethylene glycol ester compounds, and the like) have been efficiently removed can be obtained.

The pressurized filtration may be carried out by filtering the crystallized product using a Nutsche filter or a filter press. The pressure and temperature for the pressurized filtration of the crystallized product is not particularly limited, but the pressure may be 0.1 to 21 bar, 0.5 to 10 bar, or 1 to 5 bar, and the temperature may be 5 to 35°C, 10 to 30°C, or 15 to 25°C. As the pressurized filtration is carried out, a reactant (fourth reactant) from which impurities (e.g., acetate-based ester compounds, diethylene glycol ester compounds, BHET dimer, BHET trimer, and the like) have been efficiently removed can be obtained.

The distillation may be carried out by first distillation of the reactant (fourth reactant) by vacuum distillation and then second distillation thereof by thin film evaporation. As the distillation is carried out, a resulting material can be obtained in which impurities (e.g., BHET dimer, BHET trimer, and the like) have been efficiently removed while unreacted glycol compounds (e.g., ethylene glycol, diethylene glycol, and the like) are removed (recovered).

The resulting material obtained through the separation and purification procedures may be subjected to additional procedures such as filtration and drying as necessary, through which the polymerization raw material of the present invention can be obtained.

In the present invention, a reactant may refer to a product obtained through each procedure.

The polymerization raw material obtained through the above procedures can have high purity by minimizing impurities while having a high content of recycled bis(2-hydroxyethyl) terephthalate (hereinafter referred to as "r-BHET").

Specifically, the polymerization raw material may have a peak area fraction of bis(2-hydroxyethyl) terephthalate of 95% or more when measured by high-performance liquid chromatography (HPLC), which may mean that the polymerization raw material has high purity while it comprises r-BHET. For example, the polymerization raw material may have a peak area fraction of bis(2-hydroxyethyl) terephthalate of 95.3% or more, 95.5% or more, 95.8% or more, 96% or more, 96.2% or more, 96.5% or more, 96.7% or more, 97% or more, 97.2% or more, 97.5% or more, 97.8% or more, 98% or more, 98.2% or more, 98.5% or more, 99% or more, 99.5% or more, or 100% (specifically, 95 to 100%, 95.5 to 99.5%, 96 to 99%, or 97 to 98.5%), when measured by high-performance liquid chromatography (HPLC). Since the polyester resin according to the present invention is prepared using a polymerization raw material having high purity and comprising r-BHET, it can have excellent thermal resistance, color characteristics, and the like, while improving environmental problems.

According to the present invention, when the polymerization raw material is analyzed by high-performance liquid chromatography (HPLC), the peak area fraction of an acetate-based ester (HA-ester) compound may be 1.0% or less. The acetate-based ester compound may comprise 2-hydroxyethyl(2-acetoxyethyl) terephthalate, which is a substance that causes the formation of acetaldehyde (AA), which has an adverse impact; thus, it is important to control its content.

Specifically, the acetate-based ester compound may be a by-product of an acetate, which is employed as a catalyst during the depolymerization of waste polyester by a glycolysis reaction. That is, referring to the following Reaction Scheme 1, acetic acid derived from an acetate, which is used as a catalyst, may react with ethylene glycol (EG) to produce an acetate-based compound such as 2-hydroxyethyl acetate (HA) and water ($H_2O$). In such an event, 2-hydroxyethyl acetate (HA) has a boiling point similar to that of ethylene glycol (EG); thus, it as an impurity is not easily filtered out during the removal (recovery) of ethylene glycol (EG). As a result, as the process is continued, by-products such as acetate-based ester compounds are accumulated. Specifically, referring to the following Reaction Scheme 2, 2-hydroxyethyl acetate (HA) may be subjected to a transesterification reaction with bis(2-hydroxyethyl) terephthalate (BHET) to produce ester compounds such as 2-hydroxyethyl(2-acetoxyethyl) terephthalate (HAET) and ethylene glycol (EG).

[Reaction Scheme 1]

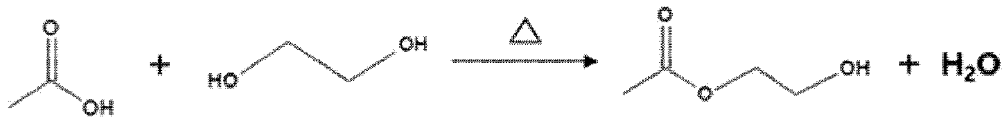

Acetic acid (From Metal Acetate)

Hydroxyethyl Acetate(HA)

[Reaction Scheme 2]

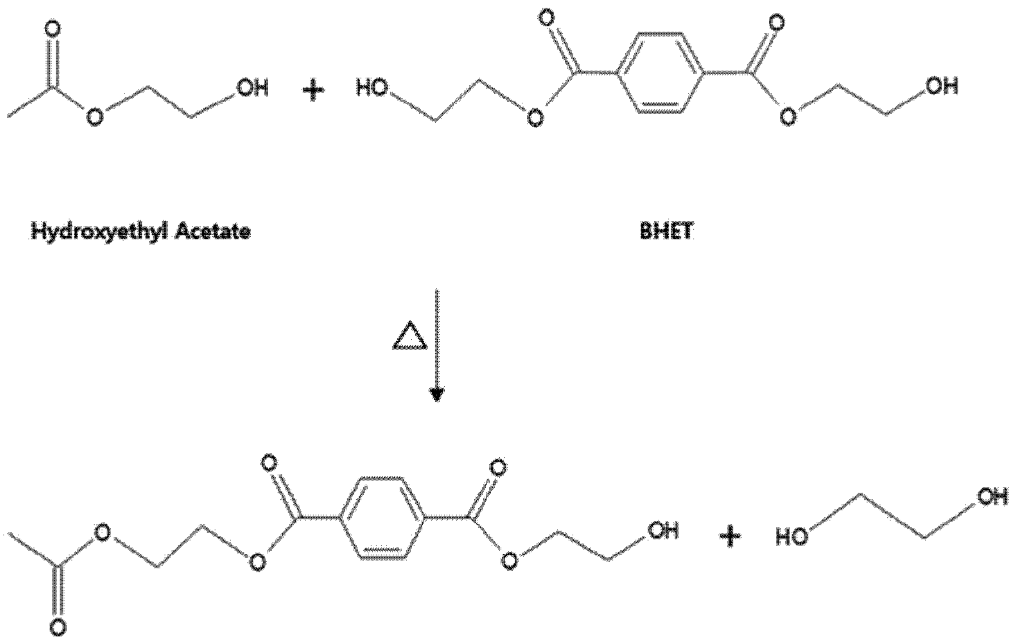

Hydroxyethyl Acetate

BHET

2-Hydroxyethyl(2-Acetoxyethyl)terephthalate (HAET)

EG

Acetate-based ester compounds, such as 2-hydroxyethyl(2-acetoxyethyl) terephthalate (HAET), are continuously accumulated during the depolymerization procedure, resulting in a polymerization raw material with a high residual content of acetate-based ester compounds. When a polymerization raw material having a high residual content of an acetate-based ester compound is used to prepare a polyester resin or a polyester preform, acetaldehyde (AA) may be formed by a side reaction of the acetate-based ester compound during the polymerization reaction or molding procedure. As a result, a polyester resin or a polyester preform containing a relatively high content of acetaldehyde (AA) may be prepared.

In the present invention, however, a polymerization raw material in which the content of an acetate-based ester (HA-ester) compound, which is an impurity that causes the formation of acetaldehyde (AA), is controlled to a specific range is used when a polyester resin is prepared.

Specifically, the polymerization raw material may have a peak area fraction of an acetate-based ester (HA-ester) compound of 0.9% or less, 0.8% or less, 0.7% or less, 0.6% or less, 0.5% or less, 0.45% or less, 0.4% or less, 0.35% or less, 0.3% or less, 0.25% or less, or 0.24% or less (e.g., 0 to 1.0%, greater than 0 to 0.5%, 0.01 to 0.4%, or 0.1 to 0.3%), when measured by high-performance liquid chromatography (HPLC).

Meanwhile, according to the present invention, when the polymerization raw material is analyzed by high-performance liquid chromatography (HPLC), the peak area fraction of diethylene glycol ester compounds may be 2.0% or less in total. The diethylene glycol ester compound may be produced by a transesterification reaction between diethylene glycol and bis(2-hydroxyethyl) terephthalate (BHET) during the procedure of depolymerizing waste polyester by a glycolysis reaction. The diethylene glycol ester compounds may specifically comprise 2-hydroxyethyl[2-(2-hydroxyethoxy)ethyl] terephthalate (DEG-ester-1) represented by the following Formula 1 and bis[2-(2-hydroxyethoxy)ethyl]benzene-1,4-dicarboxylate (DEG-ester-2) represented by the following Formula 2.

[Formula 1]

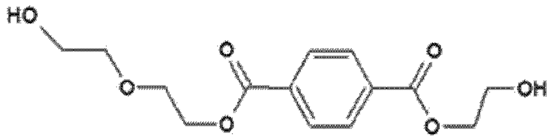

[Formula 2]

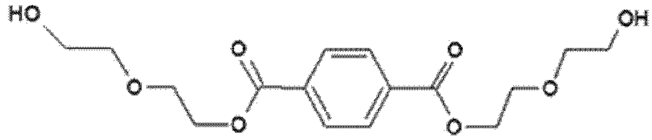

Specifically, the polymerization raw material according to the present invention may have a peak area fraction of diethylene glycol ester (DEG-ester) compounds (e.g., peak area fraction of DEG-ester-1 and peak area fraction of DEG-ester-2) of 1.9% or less, 1.8% or less, 1.7% or less, 1.6% or less, 1.5% or less, 1.4% or less, 1.3% or less, 1.2% or less, 1.1% or less, 1.0% or less, 0.95% or less, 0.9% or less, 0.7% or less, or 0.6% or less, in total, when measured by high-performance liquid chromatography (HPLC). For example, the peak area fraction of diethylene glycol ester compounds (DEG-esters) may be 0 to 2.0%, greater than 0 to 1.5%, greater than 0 to 1.0%, greater than 0 to 0.8%, greater than 0 to 0.7%, or 0.01 to 0.55%, in total.

According to the present invention, the polymerization raw material may have a peak area fraction of oligomers such as dimers or higher of 1.0% or less, in total, when measured by high-performance liquid chromatography (HPLC). The oligomers of dimers or higher may specifically be a dimer of bis(2-hydroxyethyl) terephthalate (BHET), a trimer of bis(2-hydroxyethyl) terephthalate (BHET), or a combination thereof. The oligomers may have a molecular weight of 2,000 g/mole or less (e.g., 1,000 to 2,000 g/mole).

Specifically, the polymerization raw material according to the present invention may have a peak area fraction of oligomers of dimers or higher (e.g., the peak area fraction of BHET dimers and the peak area fraction of BHET trimers) of less than 1.0%, 0.8% or less, 0.6% or less, 0.55% or less, 0.5% or less, 0.45% or less, 0.4% or less, 0.35% or less, or 0.3% or less, in total, when measured by high-performance liquid chromatography (HPLC). For example, the peak area fraction of oligomers of dimers or higher may be 0 to 1.0%, greater than 0 to 0.9%, greater than 0 to 0.7%, 0.01 to 0.5%, 0.05 to 0.45%, 0.1 to 0.4%, or 0.1 to 0.35%, in total.

Meanwhile, as the content of diethylene glycol ester compounds in the polymerization raw material increases, the melting point ($T_m$) of a polyester resin, which is an indicator for the degree of thermal resistance, linearly decreases. Acetate-based ester compounds act as a terminator that inhibits the growth of polymer chains. As its content increases in the polymerization raw material, the thermal resistance of a polyester resin decreases exponentially. A correlation can be derived using this relationship to predict the thermal resistance of a polyester resin prepared using a polymerization raw material (specifically, recycled bis(2-hydroxyethyl) terephthalate).

Specifically, the polymerization raw material according to the present invention may have a thermal property drop index (TDI) of 6.0 or less as defined by the following Equation 1, when measured by high-performance liquid chromatography (HPLC).

[Equation 1]

$$TDI = [DEG\text{-}ester\text{-}1] + ([DEG\text{-}ester\text{-}2] \times 2) + \exp\text{^}[HA\text{-}ester]$$

In Equation 1, DEG-ester-1 is the peak area fraction (%) of 2-hydroxyethyl[2-(2-hydroxyethoxy)ethyl] terephthalate, DEG-ester-2 is the peak area fraction (%) of bis[2-(2-hydroxyethoxy)ethyl]benzene-1,4-dicarboxylate, and HA-ester is the peak area fraction (%) of 2-hydroxyethyl(2-acetoxyethyl) terephthalate, wherein it is calculated by taking only the numerical values excluding the units of these parameters.

Specifically, when the thermal property drop index (TDI) represented by Equation 1 is 6.0 or less, it is possible to more effectively prevent the thermal resistance of a polyester resin from deteriorating by DEG-ester-1, DEG-ester-2, and HA-ester in the preparation of the polyester resin. For example, the thermal property drop index (TDI) may be 5.5 or less, 5.0 or less, 4.8 or less, 4.5 or less, 4.3 or less, or 4.0 or less (specifically, 0 to 5.5, 0.5 to 5.0, or 1.0 to 4.0).

According to the present invention, the polymerization raw material may have a yellow index (YID) of 5.0 or less

when measured for a solution (sample polymerization raw material solution) dissolved in dimethylformamide at a concentration of 25% by weight. Specifically, the yellow index (YID) may be 4.5 or less, 4.3 or less, 4.0 or less, 3.8 or less, 3.5 or less, 3.3 or less, 3.0 or less, 2.5 or less, 2.3 or less, 2.1 or less, 2.0 or less, 1.7 or less, 1.5 or less, or 1.3 or less. The polyester resin according to the present invention can have excellent color characteristics (e.g., transparency) since it is prepared using a polymerization raw material having a controlled yellow index (YID).

According to the present invention, the polyester resin may have a high glass transition temperature ($T_g$) and a high melting point ($T_m$), resulting in excellent thermal resistance. For example, the polyester resin may have a glass transition temperature ($T_g$) of 80°C or higher when measured by differential scanning calorimetry (DSC). Specifically, it may be 80.5°C or higher, 81°C or higher, 81.5°C or higher, 82°C or higher, or 82.5°C or higher (e.g., 80 to 85°C or 80.5 to 83°C). In addition, the polyester resin may have a melting point ($T_m$) of 240°C or higher when measured by differential scanning calorimetry (DSC). Specifically, it may be 245°C or higher, 250°C or higher, 255°C or higher, 255.5°C or higher, 256°C or higher, 256.5°C or higher, 257°C or higher, or 257.5°C or higher (e.g., 255 to 260°C or 257 to 258°C).

According to the present invention, the polyester resin may have a very low content of diethylene glycol (DEG), which is considered an impurity along with acetaldehyde (AA). Specifically, in the polyester resin, the content of diethylene glycol (DEG) measured by gas chromatography (GC) may be 2.0% by weight or less. More specifically, it may be 1.8% by weight or less, 1.5% by weight or less, 1.3% by weight or less, 1.0% by weight or less, 0.9% by weight or less, 0.8% by weight or less, 0.7% by weight or less, or 0.6% by weight or less (e.g., 0 to 2.0% by weight, greater than 0 to 1.5% by weight, or 0.1 to 1.0% by weight).

The polyester resin can have excellent color characteristics (e.g., transparency). Specifically, when colors L, a, and b are measured using the CIE LAB indices, and when the L - b value is calculated from the measurement results, the L - b value may be greater than 80, 82 or more, 83 or more, 84 or more, 85 or more, 86 or more, 87 or more, 88 or more, or 89 or more (e.g., 81 to 90 or 85 to 89.5). The CIE LAB index is a color space coordinate defined by the CIE (Commission International d'Eclairage). An L value represents brightness (0-100; 0 is black, 100 is white), an a value represents green-red (+ is red and - is green based on 0), and a b value represents yellow-blue (+ is yellow and - is blue based on 0).

The polyester resin may have an intrinsic viscosity (IV) controlled to a specific range, resulting in excellent processability. Specifically, the intrinsic viscosity (solid-phase IV) of the polyester resin may be 0.75 to 0.85 dl/g, 0.76 to 0.84 dl/g, 0.77 to 0.83 dl/g, or 0.78 to 0.82 dl/g.

**Polyester preform**

The polyester preform according to the present invention is prepared from the polyester resin described above. For example, the polyester preform may be a polyester injection-molded article obtained by injection molding the polyester resin described above. Since the polyester preform is prepared using the polyester resin described above, it can have a very low content of acetaldehyde and an intrinsic viscosity (IV) similar to that of the polyester resin, resulting in excellent thermal stability.

Specifically, when the polyester resin described above is molded at a temperature of 290°C to prepare a polyester preform, and when the polyester preform is analyzed by gas chromatography (GC), the content of acetaldehyde (AA) of the polyester preform may be 25 ppm or less. For example, the content of acetaldehyde (AA) of the polyester preform may be less than 25 ppm, 24 ppm or less, less than 24 ppm, 23 ppm or less, 22 ppm or less, 21 ppm or less, 20 ppm or less, 19 ppm or less, 18 ppm or less, 17 ppm or less, 16 ppm or less, or 15 ppm or less (specifically, 0 to 25 ppm, greater than 0 to less than 25 ppm, 0.01 to 24 ppm, 0.05 to 20 ppm, or 0.1 to 18 ppm).

In addition, the polyester preform may have an intrinsic viscosity (IV) of 0.75 to 0.82 dl/g, specifically, 0.75 to 0.81 dl/g, 0.76 to 0.80 dl/g, or 0.76 to 0.79 dl/g.

According to the present invention, the polyester preform may have a change in intrinsic viscosity (IVv) of 0.05 dl/g or less according to the following Equation 2. Specifically, the change in intrinsic viscosity (IVv) may be less than 0.05 dl/g, 0.04 dl/g or less, 0.03 dl/g or less, 0.02 dl/g or less, or 0.01 dl/g or less (e.g., 0.01 to 0.05 dl/g, 0.01 to 0.04 dl/g, or 0.01 to 0.03 dl/g). As the change in intrinsic viscosity (IVv) is within the above range, thermal stability can be secured when a polyester preform is prepared by molding a polyester resin.

[Equation 2]

$$IV_V = IV_1 - IV_2$$

In Equation 2, $IV_1$ is the intrinsic viscosity of the polyester resin, and $IV_2$ is the intrinsic viscosity of the polyester preform (specifically, a preform obtained by molding the polyester resin at a temperature of 290°C).

## Polyester container

The polyester container according to the present invention is prepared from the polyester resin described above. Since the polyester container is prepared using the polyester resin described above, it has excellent thermal resistance, weather resistance, color characteristics (transparency), and the like, while it is possible to minimize the release of acetaldehyde (AA) from the polyester container.

In particular, since the polyester container is prepared using the polyester resin in which the content of acetaldehyde (AA) is controlled to a minimum, it can be suitably used as a beverage container for not only cold beverages but also hot beverages.

Meanwhile, according to the present invention, the polyester container may have a change in color (Cv) of 2 or less according to the following Equation 3. Specifically, the change in color ($C_V$) may be less than 2, 1.9 or less, 1.8 or less, 1.7 or less, 1.6 or less, 1.5 or less, 1.4 or less, 1.3 or less, 1.2 or less, 1.1 or less, or 1.0 or less (e.g., 0 to less than 2, greater than 0 to 1.9, or 0.5 to 1.5). As the change in color (Cv) is within the above range, it is possible to prevent the change in color of the polyester container even when the polyester container is stored under high temperature and humid conditions.

[Equation 3]

$$C_V = C_1 - C_2$$

In Equation 3, $C_1$ is the difference ($L_1 - b_1$) between the color L value ($L_1$) and the color b value ($b_1$) of the polyester container (initial polyester container), and $C_2$ is the difference ($L_2 - b_2$) between the color L value ($L_2$) and the color b value ($b_2$) of the polyester container obtained by leaving the polyester container (initial polyester container) in a constant temperature and humidity oven at 50°C and 60% relative humidity for 500 hours.

## Process for preparing a polyester container

The process for preparing a polyester container according to the present invention comprises first molding the polyester resin at a temperature of 250 to 300°C to produce a polyester preform; and second molding the polyester preform.

The temperature for first molding the polyester resin to prepare the polyester preform may specifically be 260 to 295°C, 270 to 295°C, or 280 to 290°C.

The first molding may be carried out by injection molding, extrusion molding, or vacuum molding, commonly known, and preferably by injection molding.

The second molding is a molding to complete the shape of the polyester container, and it may preferably be carried out by blow molding. The blow molding may be carried out by a commonly known method.

## Mode for the Invention

Hereinafter, the present invention will be described in more detail with reference to embodiments. However, these examples are provided only for illustration purposes, and the present invention is not limited thereto.

### <Preparation of a polymerization raw material>

### [Preparation Example 1]

A first reactor made of stainless steel (SUS) was charged with 1,000 g of a waste polyester resin, 2,000 g of ethylene glycol, and 5.0 g of zinc acetate anhydride. The temperature inside the first reactor was raised to 180°C, and a first depolymerization (first glycolysis reaction) was carried out for 2 hours to obtain a first reactant. The first reactant thus obtained was transferred to a second reactor and cooled to 150°C. Then, 2,000 g of ethylene glycol was further fed to the second reactor, and a second depolymerization (second glycolysis reaction) was carried out for 2 hours while the temperature inside the second reactor was maintained at 150°C to obtain a second reactant.

The second reactant thus obtained was cooled to 120°C through reduced pressure flash, and 16 g of a filter aid (Celite™ 545) was added thereto, followed by pressurized filtration (solid-liquid separation), to obtain a liquid reactant. Subsequently, the liquid reactant was passed through a column filled with an ion-exchange resin (BC107(H) of Bonlite) to remove ionic impurities contained in the liquid reactant to obtain a third reactant comprising bis(2-hydroxyethyl) terephthalate (BHET) and ethylene glycol.

The third reactant was charged to a 10-liter crystallizer equipped with a cooling water circulation jacket and stirred at 100 rpm for 2 hours to be cooled to room temperature for crystallization thereof. The crystallized product obtained

through the crystallization was subjected to solid-liquid separation under a pressure condition of 3 bar using a pressurized Nutsche filter (jacket type, filtration area of 0.2 $m^2$) to obtain a BHET cake as the fourth reactant.

The BHET cake was transferred to a 10-liter distillation apparatus and heated to 130°C again. Vacuum distillation was carried out under stepwise reduced pressure conditions from 760 Torr to 0.8 Torr to remove (recover) unreacted ethylene glycol. The fifth reactant from which unreacted ethylene glycol had been removed was subjected to thin film evaporation at 220°C and 0.08 Torr in a thin film evaporator (VKL70-4S of VTA) to obtain 1,040 g of a resulting material from which oligomers of dimers or higher had been removed.

Thereafter, for adsorption-crystallization, 1,040 g of the resulting material and 3,120 g of distilled water were charged to a 10-liter glass reactor, dissolved at a temperature of 70°C, and then 5.2 g of activated carbon was added thereto, followed by stirring for 30 minutes and filtration thereof. Next, the filtrate was cooled to room temperature to crystallize the same, filtered again, and dried in a vacuum oven, thereby obtaining 1,980 g of a polymerization raw material (polymerization raw material solution) comprising recycled bis(2-hydroxyethyl) terephthalate (r-BHET).

**[Preparation Example 2]**

The same procedure as in Example 1 was repeated to obtain a polymerization raw material (polymerization raw material solution) comprising recycled bis(2-hydroxyethyl) terephthalate (r-BHET), except that the reaction time of the first glycolysis reaction was adjusted to 1 hour from 2 hours.

**[Preparation Example 3]**

The same procedure as in Example 1 was repeated to obtain a polymerization raw material (polymerization raw material solution) comprising recycled bis(2-hydroxyethyl) terephthalate (r-BHET), except that the filtration was carried out using a filter press (filtration area of 0.4 $m^2$, filtration plate of 4 ea) under a pressure of 18 bar instead of the pressurized Nutsche filter.

**[Preparation Example 4]**

The same procedure as in Example 1 was repeated to obtain a polymerization raw material (polymerization raw material solution) comprising recycled bis(2-hydroxyethyl) terephthalate (r-BHET), except that a waste polyester fiber was used instead of the waste polyester resin.

**[Preparation Example 5]**

The same procedure as in Example 1 was repeated to obtain a polymerization raw material (polymerization raw material solution) comprising recycled bis(2-hydroxyethyl) terephthalate (r-BHET), except that the adsorption-crystallization was not carried out after the thin film evaporation.

**[Comparative Preparation Example 1]**

The same procedure as in Example 1 was repeated to obtain a polymerization raw material (polymerization raw material solution) comprising recycled bis(2-hydroxyethyl) terephthalate (r-BHET), except that the temperature in the first glycolysis reaction was adjusted to 210°C from 180°C, and the temperature in the second glycolysis reaction was adjusted to 250°C from 150°C.

**[Comparative Preparation Example 2]**

The same procedure as in Example 1 was repeated to obtain a polymerization raw material (polymerization raw material solution) comprising recycled bis(2-hydroxyethyl) terephthalate (r-BHET), except that the cooling crystallization and pressurized Nutsche filter procedures were not carried out.

**[Test Example 1]**

The polymerization raw materials obtained above were each tested by the following methods. The results are shown in Table 1 below.

**(1) High-performance liquid chromatography (HPLC)**

About 0.01 g of a sample (polymerization raw material) was diluted in about 20 ml of methanol, which was analyzed by high-performance liquid chromatography (HPLC) (model: Waters e2695, column: C18 (4.6 × 250 mm), 5 μm, UV detector: 242 nm, injection volume: 10 μl, eluent (gradient) A: $H_2O + H_3PO_4$, B: acetonitrile). Thereafter, the peak area fractions (%) of the following components among the total peak area of HPLC were obtained.

- MHET: monohydroxyethyl terephthalate
- BHET: bis(2-hydroxyethyl) terephthalate,
- DEG-ester-1: 2-hydroxyethyl[2-(2-hydroxyethoxy)ethyl] terephthalate
- DEG-ester-2: bis[2-(2-hydroxyethoxy)ethyl]benzene-1,4-dicarboxylate
- HA-ester: 2-hydroxyethyl(2-acetoxyethyl) terephthalate
- Dimer: BHET dimer
- Trimer: BHET trimer

**(2) Gas chromatography (GC)**

About 0.1 g of a sample (polymerization raw material) was diluted in about 10 ml of $CHCl_3$, treated with a filter of 0.45 μm, and then measured by gas chromatography (GC).

- Model: Agilent 7890B
- Column: DB-624 (30 m × 0.25 mm × 1.4 μm)
- Oven Temp.: 60°C (2 min.) - 10°C/min. - 200°C (0 min.) - 20°C/min. - 260°C (5 min.)
- Injector temp.: 250°C
- Detector temp.: 250°C
- Flow: 1.5 ml/min. ($N_2$), split ratio: 1/50

**(3) TDI**

HPLC analysis was carried out using the test method of Section (1) above, and the thermal property drop index (TDI) represented by the following Equation 1 was calculated.

[Equation 1]

$$TDI = [DEG\text{-}ester\text{-}1] + ([DEG\text{-}ester\text{-}2] \times 2) + exp\text{^}[HA\text{-}ester]$$

In Equation 1, DEG-ester-1 is the peak area fraction (%) of 2-hydroxyethyl[2-(2-hydroxyethoxy)ethyl] terephthalate, DEG-ester-2 is the peak area fraction (%) of bis[2-(2-hydroxyethoxy)ethyl]benzene-1,4-dicarboxylate, and HA-ester is the peak area fraction (%) of 2-hydroxyethyl(2-acetoxyethyl) terephthalate, wherein, in Equation 1, it is calculated by taking only the numerical values excluding the units of these parameters. Here, exp^ stands for exponential function (e^).

**(4) Melting point (Tm)**

The melting point was measured while heating from 30°C to 280°C at a rate of 20°C/minute using a differential scanning calorimeter (DSC, TA Instruments Q20).

**(5) Inductively coupled plasma atomic emission spectroscopy (ICP-AES)**

0.3 g of a sample (polymerization raw material) was treated with ultrasonic waves and diluted with ultrapure water. The content (ppm) of inorganic substances was measured using ICP-AES (Model 5100 of Agilent) (detection limit of 5 ppm).

**(6) Yellow index (YID)**

A sample (polymerization raw material) was dissolved in dimethylformamide at room temperature at a concentration of 25% by weight to prepare a solution. The solution thus prepared was left for 30 minutes, after which its yellow

index was measured. Specifically, transmission data were obtained with Illuminuteant D65 using Color Flex EZ of Hunter Lab at an observer's angle of 2°. The yellow index (YID) value was calculated using a color analyzer in the software.

[Table 1]

| | | Prep. Ex. 1 | Prep. Ex. 2 | Prep. Ex. 3 | Prep. Ex. 4 | Prep. Ex. 5 | C. Prep. Ex. 1 | C. Prep. Ex. 2 |
|---|---|---|---|---|---|---|---|---|
| HPLC (%) | BHET | 98.20 | 98.10 | 98.51 | 97.22 | 96.21 | 90.04 | 91.20 |
| | MHET | 0.78 | 1.10 | 0.67 | 1.70 | 1.72 | 1.82 | 2.14 |
| | DEG-ester-1 | 0.41 | 0.32 | 0.22 | 0.44 | 0.80 | 5.20 | 1.85 |
| | DEG-ester-2 | 0.04 | 0.02 | 0.02 | 0.08 | 0.12 | 1.32 | 0.98 |
| | HA-ester | 0.20 | 0.21 | 0.11 | 0.23 | 0.41 | 0.33 | 1.12 |
| | Dimer | 0.21 | 0.20 | 0.34 | 0.28 | 0.22 | 0.22 | 0.79 |
| | Trimer | 0.01 | 0.00 | 0.00 | 0.01 | 0.05 | 0.90 | 0.70 |
| | Others | 0.15 | 0.05 | 0.13 | 0.04 | 0.47 | 0.17 | 1.22 |
| GC (% by weight) | Residual EG | 0.10 | 0.10 | 0.10 | 0.10 | 0.20 | 0.22 | 0.23 |
| TDI | | 1.71 | 1.59 | 1.38 | 1.86 | 2.55 | 9.23 | 6.87 |
| Tm (°C) | | 112.2 | 111.9 | 112.3 | 112.5 | 111.7 | 109.2 | 107.6 |
| ICP-AES (ppm) | Zn | N.D. | N.D. | N.D. | N.D. | N.D. | N.D. | N.D. |
| | Sb | N.D. | N.D. | N.D. | N.D. | N.D. | N.D. | N.D. |
| | Fe | N.D. | N.D. | N.D. | N.D. | N.D. | N.D. | N.D. |
| | P | N.D. | N.D. | N.D. | 6 | N.D. | N.D. | N.D. |
| | Mn | N.D. | N.D. | N.D. | N.D. | N.D. | N.D. | N.D. |
| | Mg | N.D. | N.D. | N.D. | N.D. | 5 | N.D. | 5 |
| | Al | N.D. | N.D. | N.D. | N.D. | N.D. | N.D. | N.D. |
| | Co | N.D. | N.D. | N.D. | N.D. | N.D. | N.D. | N.D. |
| | Na | N.D. | N.D. | N.D. | N.D. | N.D. | N.D. | N.D. |
| | K | N.D. | N.D. | N.D. | N.D. | N.D. | N.D. | N.D. |
| YID | | 1.45 | 1.21 | 0.90 | 2.00 | 3.20 | 6.80 | 5.11 |

Referring to Table 1 above, the polymerization raw materials of Preparation Examples 1 to 5 according to the present invention had an HPLC peak area fraction of diethylene glycol ester (DEG-ester-1, DEG-ester-2) compounds of 2.0% or less in total and an HPLC peak area fraction of acetate-based ester (HA-ester) compound of 1.0% or less in total, while the contents of other impurities (MHET, dimer, trimer) or residual EG were very low. In addition, they were excellent in melting point ($T_m$) and yellow index (YID).

In particular, in the polymerization raw materials of Preparation Examples 1 to 5, the thermal property drop index (TDI) was 5.0 or less while the content of HA-ester was very low. Thus, when a polyester resin is prepared using the same, it is expected that a polyester resin with excellent thermal resistance and a minimized content of acetaldehyde (AA) will be prepared.

**<Preparation of a polyester resin>**

**[Example 1]**

A 7-liter reactor capable of a reaction under vacuum was charged with 2,775 g of the polymerization raw material (solution containing r-BHET) of Preparation Example 1, 0.8 g of antimony trioxide as a catalyst, 0.6 g of triethyl phosphate as a stabilizer, and 0.4 g of cobalt acetate as a colorant. Subsequently, the temperature of the reactor was raised to 190°C over 2 hours. When it reached 190°C, the pressure of the reactor was reduced from normal pressure to 20 Torr over 30 minutes. At the same time, the temperature of the reactor was raised to 280°C over 1 hour, and a polycondensation

reaction was carried out while the pressure of the reactor was maintained at 1 Torr or less. At the beginning of the polycondensation reaction, the stirring speed was set high. As the polycondensation reaction proceeded, when the stirring power was weakened due to the increase in the viscosity of the reactants or the temperature of the reactants rose above the set temperature, the stirring speed was appropriately adjusted accordingly. The polycondensation reaction was carried out until the intrinsic viscosity (IV) of the mixture (melt) in the reactor reached 0.64 dl/g. Thereafter, when the intrinsic viscosity (IV) of the mixture in the reactor reached the desired level, the mixture was then discharged to the outside of the reactor to form strands, which were solidified with a cooling liquid and then granulated to have an average weight of about 12 to 14 mg.

Next, the granulated product was left at 150°C for 1 hour to be crystallized, which was then charged to a 20-liter reactor for a solid-state polymerization. Thereafter, nitrogen flowed into the solid-state polymerization reactor at a rate of 50 liters/minute. In such an event, the temperature of the solid-state polymerization reactor was raised from room temperature to 140°C at a rate of 40°C/hour and maintained at 140°C for 3 hours. Then, it was raised to 220°C at a rate of 40°C/hour, and a solid-state polymerization was carried out at 220°C. The solid-state polymerization reaction was carried out until the intrinsic viscosity (IV) of the granulated product reached 0.81 dl/g to prepare a polyester resin (recycled polyester resin).

**[Examples 2 to 5]**

A polyester resin (recycled polyester resin) was obtained by carrying out the same polymerization reaction procedure as in Example 1, except that the polymerization raw materials of Preparation Examples 2 to 5 were each used.

**[Comparative Examples 1 and 2]**

A polyester resin (recycled polyester resin) was obtained by carrying out the same polymerization reaction procedure as in Example 1, except that the polymerization raw materials of Comparative Preparation Examples 1 and 2 were each used.

**<Preparation of a polyester container>**

**[Production Examples 1 to 5]**

The polyester resin obtained in each of Examples 1 to 5 was dried in a vacuum oven at 150°C and 1 Torr or less for 10 hours. It was first injection-molded using a Nissei ASB 150 injection molding machine under the conditions of a temperature of 290°C, a mold cooling time of 6 seconds, and a total cycle time of 20 seconds to prepare a transparent preform having a weight of 50 g.

The preform thus prepared was heated using an LB01E bottle forming machine manufactured by Krupp under the conditions of a primary pressure of 7 $kg/cm^2$, a secondary pressure of 25 $kg/cm^2$, and a heating time by an infrared lamp heater of 26.5 seconds. A polyester bottle was then manufactured by bottle forming (secondary blow molding) with a thermal equilibrium time of 8 seconds and the temperature of the preform immediately before bottle forming set to 112 to 120°C.

**[Comparative Production Examples 1 and 2]**

A polyester bottle was manufactured by the same procedure as in Production Example 1, except that the polyester resins obtained in Comparative Examples 1 and 2 were each used.

**[Test Example 2]**

The polyester resins and polyester bottles obtained above were each tested by the following methods. The results are shown in Table 2 below.

**(1) Intrinsic viscosity (IV)**

A sample (polyester resin or polyester preform) was dissolved in orthochlorophenol (OCP) at 150°C at a concentration of 1.2 g/dl to obtain a solution, and an Ubbelohde viscometer was used to measure intrinsic viscosity. Specifically, the temperature of the viscosity tube was maintained at 35°C, and the time (efflux time) required for the solvent to pass between specific internal sections of the viscosity tube and the time required for the sample solution to pass were measured to obtain specific viscosity, which was used to calculate intrinsic viscosity.

**(2) Glass transition temperature ($T_g$) and melting point ($T_m$)**

The glass transition temperature of a sample (polyester resin or polyester preform) was measured using a differential scanning calorimeter (DSC, Q20 model, TA instrument). Specifically, each sample was filled in an aluminum pan, heated up to 290°C at 10°C/minute, maintained at 290°C for 5 minutes, and then cooled down to 30°C at -300°C/minute. Subsequently, the glass transition temperature ($T_g$) and melting temperature ($T_m$) were measured from the heat flow obtained when the temperature was raised to 280°C at 10°C/minute.

**(3) Gas chromatography (GC)**

Each sample (polyester resin or polyester preform) was analyzed by gas chromatography (GC, Agilent 7890B) to determine the content of residual DEG and that of acetaldehyde (AA). In such an event, the polyester resin sample was prepared by pulverizing each polyester resin using a pulverizer and subjecting 2 g of the pulverized polyester resin to aminolysis using hydrazine hydrate. In addition, the polyester preform sample was prepared by cutting each polyester preform to collect 3.0 g thereof, pulverizing it with a freeze pulverizer, filtering it using a 30-mesh filter, putting 1 g thereof into a vial, sealing it, and heating and maintaining it at 150°C for 40 minutes.

**(4) Polyester resin color (L - b)**

The colors L, a, and b of each sample (polyester resin) were measured based on the CIE LAB indices using a colorimeter (CHROMA METER CR-410, Konica Minolta). Based on the results, the L - b value was calculated.

**(5) Polyester container color (L - b)**

The chromaticity and brightness of each polyester container specimen were measured using a Varian Cary 5 UV/Vis/NIR spectrophotometer equipped with a diffuse reflection accessory. Specifically, the label panel portion of each polyester container was cut to prepare a specimen having a width of 30 mm in and a length of 30 mm, for which transmission data with Illuminant D65 at an observer's angle of 2° were obtained and processed (based on the CIE LAB indices) using a color analyzer in Grams/32 software to calculate colors L, a, and b values. Based on the results, the L - b value was calculated. Further, the change in color (Cv) was calculated using the following Equation 3.

[Equation 3]

$$C_V = C_1 - C_2$$

In Equation 3, $C_1$ is the difference ($L_1$ - $b_1$) between the color L value ($L_1$) and the color b value ($b_1$) of the polyester container (initial polyester container specimen), and $C_2$ is the difference ($L_2$ - $b_2$) between the color L value ($L_2$) and the color b value ($b_2$) of the polyester container obtained by leaving the polyester container (initial polyester container specimen) in a constant temperature and humidity oven at 50°C and 60% relative humidity for 500 hours.

[Table 2]

| | | Prod. Ex. 1 (Ex. 1) | Prod. Ex. 2 (Ex. 2) | Prod. Ex. 3 (Ex. 3) | Prod. Ex. 4 (Ex. 4) | Prod. Ex. 5 (Ex. 5) |
|---|---|---|---|---|---|---|
| Polyester resin | $IV_1$ (dl/g) | 0.81 | 0.79 | 0.82 | 0.77 | 0.78 |
| | Tg (°C) | 82.2 | 82.0 | 82.5 | 81.5 | 80.8 |
| | Tm (°C) | 257.4 | 257.6 | 257.9 | 257.2 | 256.2 |
| | DEG (% by weight) | 0.8 | 0.9 | 0.6 | 0.8 | 1.0 |
| | Color L - b | 88.4 | 87.8 | 89.3 | 87.2 | 86.6 |
| Polyester preform | $IV_2$ (dl/g) | 0.78 | 0.77 | 0.79 | 0.76 | 0.76 |
| | $IV_1$ - $IV_2$ (dl/g) | 0.03 | 0.02 | 0.03 | 0.01 | 0.02 |
| | AA (ppm) | 16 | 18 | 15 | 18 | 24 |

(continued)

| | | Prod. Ex. 1 (Ex. 1) | Prod. Ex. 2 (Ex. 2) | Prod. Ex. 3 (Ex. 3) | Prod. Ex. 4 (Ex. 4) | Prod. Ex. 5 (Ex. 5) |
|---|---|---|---|---|---|---|
| Polyester container | $C_1$ (Color $L_1$ - $b_1$) | 94.5 | 94.6 | 94.8 | 94.5 | 93.9 |
| | $C_2$ (Color $L_2$ - $b_2$) (at 50°C, 60%) | 93.1 | 93.4 | 93.8 | 93 | 92 |
| | Cv ($C_1$ - $C_2$) | 1.4 | 1.2 | 1.0 | 1.5 | 1.9 |

[Table 3]

| | | C. Prod. Ex. 1 (C. Ex. 1) | C. Prod. Ex. 2 (C. Ex. 2) |
|---|---|---|---|
| Polyester resin | $IV_1$ (dl/g) | 0.82 | 0.80 |
| | Tg (°C) | 76.6 | 77.1 |
| | Tm (°C) | 246.1 | 249.7 |
| | DEG (% by weight) | 6.5 | 2.8 |
| | Color L - b | 74.5 | 80.0 |
| Polyester preform | $IV_2$ (dl/g) | 0.70 | 0.72 |
| | $IV_1$ - $IV_2$ (dl/g) | 0.12 | 0.08 |
| | AA (ppm) | 42 | 35 |
| Polyester | $C_1$ | 88.4 | 90.2 |
| container | (Color $L_1$ - $b_1$) | | |
| | $C_2$ (Color $L_2$ - $b_2$) (at 50°C, 60%) | 84.4 | 87.7 |
| | $C_v$ ($C_1$ - $C_2$) | 4.0 | 2.5 |

Referring to Tables 2 and 3 above, the polyester resins of Examples 1 to 5 according to the present invention had excellent thermal resistance by virtue of a high glass transition temperature and a high melting point, while the content of residual diethylene glycol (DEG) and that of acetaldehyde (AA), as a by-product, are very low, making them suitable for manufacturing polyester containers (e.g., beverage bottles). In addition, there was almost no change in the intrinsic viscosity ($IV_1$ - $IV_2$) in the procedure of preparing the polyester preform from the polyester resin, indicating that the thermal stability was excellent, and color characteristics were secured.

Further, the polyester containers of Production Examples 1 to 5 according to the present invention had little change in the color characteristics even under high temperature and high humidity conditions, indicating that the thermal resistance and weather resistance were excellent.

In contrast, the polyester resins of Comparative Examples 1 and 2 had poor thermal resistance due to a low glass transition temperature and a low melting point, while the content of residual diethylene glycol (DEG) and that of acetaldehyde (AA), as a by-product, were high, making them unsuitable for manufacturing polyester containers. This can be seen as a result that the polymerization raw materials of Comparative Preparation Examples 1 and 2 having low purity were used in the preparation of the polyester resins of Comparative Examples 1 and 2, respectively.

## Claims

**1.** A polyester resin, which comprises a repeat unit derived from a polymerization raw material comprising recycled bis(2-hydroxyethyl) terephthalate, wherein when a preform obtained by molding the polyester resin at a temperature of 290°C is analyzed by gas chromatography (GC), the content of acetaldehyde (AA) is 25 ppm or less.

**2.** The polyester resin of claim 1, wherein the peak area fraction of bis(2-hydroxyethyl) terephthalate is 95% or more, and the peak area fraction of an acetate-based ester compound is 1.0% or less, when the polymerization raw material is analyzed by high-performance liquid chromatography (HPLC).

**3.** The polyester resin of claim 2, wherein the acetate-based ester compound comprises 2-hydroxyethyl(2-acetoxyethyl) terephthalate.

4. The polyester resin of claim 1, wherein the peak area fraction of a diethylene glycol ester compound is 2.0% or less in total when the polymerization raw material is analyzed by high-performance liquid chromatography (HPLC).

5. The polyester resin of claim 1, wherein the polymerization raw material has a yellow index (YID) of 5.0 or less when measured for a solution thereof as dissolved in dimethylformamide at a concentration of 25% by weight.

6. The polyester resin of claim 1, wherein thermal property drop index (TDI) is 6.0 or less, as defined by the following Equation 1, when the polymerization raw material is analyzed by high-performance liquid chromatography (HPLC):

[Equation 1]

$$TDI = [DEG\text{-}ester\text{-}1] + ([DEG\text{-}ester\text{-}2] \times 2) + \exp\hat{}[HA\text{-}ester]$$

in Equation 1, DEG-ester-1 is the peak area fraction (%) of 2-hydroxyethyl[2-(2-hydroxyethoxy)ethyl] terephthalate, DEG-ester-2 is the peak area fraction (%) of bis[2-(2-hydroxyethoxy)ethyl]benzene-1,4-dicarboxylate, and HA-ester is the peak area fraction (%) of 2-hydroxyethyl(2-acetoxyethyl) terephthalate, wherein it is calculated by taking only the numerical values excluding the units of these parameters.

7. The polyester resin of claim 1, wherein the content of diethylene glycol (DEG) is 2.0% by weight or less when the polyester resin is analyzed by gas chromatography (GC).

8. A polyester preform, which is prepared from the polyester resin according to any one of claims 1 to 7.

9. The polyester preform of claim 8, which has a change in intrinsic viscosity (IVv) of 0.05 dl/g or less according to the following Equation 2:

[Equation 2]

$$IV_V = IV_1 - IV_2$$

in Equation 2, $IV_1$ is the intrinsic viscosity of the polyester resin, and $IV_2$ is the intrinsic viscosity of the polyester preform.

10. A polyester container, which is prepared from the polyester resin according to any one of claims 1 to 7.

11. The polyester container of claim 10, which has a change in color (Cv) of 2 or less according to the following Equation 3:

[Equation 3]

$$C_V = C_1 - C_2$$

in Equation 3, $C_1$ is the difference ($L_1$ - $b_1$) between the color L value ($L_1$) and the color b value ($b_1$) of the polyester container, and $C_2$ is the difference ($L_2$ - $b_2$) between the color L value ($L_2$) and the color b value ($b_2$) of the polyester container obtained by leaving the polyester container in a constant temperature and humidity oven at 50°C and 60% relative humidity for 500 hours.

12. A process for preparing a polyester container, which comprises first molding the polyester resin according to any one of claims 1 to 7 at a temperature of 250 to 300°C to produce a polyester preform; and second molding the polyester preform.

13. The process for preparing a polyester container according to claim 12, wherein the first molding is injection molding, and the second molding is blow molding.

**INTERNATIONAL SEARCH REPORT**

International application No.
**PCT/KR2024/012668**

**A. CLASSIFICATION OF SUBJECT MATTER**

**C08G 63/183**(2006.01)i; **C08G 63/78**(2006.01)i; **C08J 11/24**(2006.01)i

According to International Patent Classification (IPC) or to both national classification and IPC

**B. FIELDS SEARCHED**

Minimum documentation searched (classification system followed by classification symbols)

C08G 63/183(2006.01); B29C 49/02(2006.01); B65D 1/00(2006.01); C07C 67/29(2006.01); C07C 67/52(2006.01); C07C 69/82(2006.01); C08G 63/60(2006.01); C08L 67/03(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재생 비스(2-히드록시에틸)테레프탈레이트(recycled bis(2-hydroxyethyl)terephthalate, rBHET), 폴리에스테르(polyester), 성형(molding), 가스 크로마토그래피(gas chromatography), 아세트알데히드(acetaldehyde)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0069611 A (SK CHEMICALS CO., LTD. et al.) 19 May 2023 (2023-05-19) See paragraphs [0001]-[0103]. | 1-13 |
| Y | KR 10-2008-0056223 A (EASTMAN CHEMICAL COMPANY) 20 June 2008 (2008-06-20) See paragraphs [0019]-[0093]. | 1-13 |
| Y | KR 10-2022-0064077 A (SK CHEMICALS CO., LTD.) 18 May 2022 (2022-05-18) See paragraphs [0046]-[0113]. | 5,11 |
| A | JP 2006-103744 A (TOYO SEIKAN KAISHA LTD.) 20 April 2006 (2006-04-20) See entire document. | 1-13 |
| A | CN 110590551 A (RECYCLED POLYESTER RESEARCH CO., LTD.) 20 December 2019 (2019-12-20) See entire document. | 1-13 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 November 2024** | **28 November 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/012668**

| Patent document cited in search report | | | Publication date (day/month/year) | Patent family member(s) | | | Publication date (day/month/year) |
|---|---|---|---|---|---|---|---|
| KR | 10-2023-0069611 | A | 19 May 2023 | None | | | |
| KR | 10-2008-0056223 | A | 20 June 2008 | CN | 101291974 | A | 22 October 2008 |
| | | | | EP | 1937748 | A1 | 02 July 2008 |
| | | | | EP | 2202258 | A3 | 03 November 2010 |
| | | | | JP | 2009-512756 | A | 26 March 2009 |
| | | | | US | 2007-0092672 | A1 | 26 April 2007 |
| | | | | US | 2011-0031210 | A1 | 10 February 2011 |
| | | | | US | 9777111 | B2 | 03 October 2017 |
| | | | | WO | 2007-047322 | A1 | 26 April 2007 |
| KR | 10-2022-0064077 | A | 18 May 2022 | CN | 116406403 | A | 07 July 2023 |
| | | | | EP | 4245790 | A1 | 20 September 2023 |
| | | | | JP | 2023-549183 | A | 22 November 2023 |
| | | | | KR | 10-2583653 | B1 | 26 September 2023 |
| | | | | US | 2024-0002588 | A1 | 04 January 2024 |
| | | | | WO | 2022-102936 | A1 | 19 May 2022 |
| JP | 2006-103744 | A | 20 April 2006 | None | | | |
| CN | 110590551 | A | 20 December 2019 | None | | | |

Form PCT/ISA/210 (patent family annex) (July 2022)